Europäisches Patentamt

European Patent Office

Office européen des brevets

(19)

(11) Veröffentlichungsnummer: **0 198 996**
**B1**

(12) **EUROPÄISCHE PATENTSCHRIFT**

(45) Veröffentlichungstag der Patentschrift:
**11.10.89**

(51) Int. Cl.⁴: **C04B 7/43, F27B 7/20**

(21) Anmeldenummer: **86100596.5**

(22) Anmeldetag: **17.01.86**

(54) Verfahren und Anlage zur Wärmebehandlung von feinkörnigem Gut.

(30) Priorität: 22.03.85 DE 3510501
21.06.85 DE 3522272

(43) Veröffentlichungstag der Anmeldung:
**29.10.86 Patentblatt 86/44**

(45) Bekanntmachung des Hinweises auf die Patenterteilung:
**11.10.89 Patentblatt 89/41**

(84) Benannte Vertragsstaaten:
**BE DE FR GB IT**

(56) Entgegenhaltungen:
EP-A- 0 003 123
EP-A- 0 031 901
DE-A- 2 724 654
FR-A- 2 404 823
FR-A- 2 542 434

(73) Patentinhaber: **KRUPP POLYSIUS AG,**
**Graf-Galen-Strasse 17, D-4720 Beckum(DE)**

(72) Erfinder: **Tiggesbäumker, Peter, Dipl.-Ing.,**
**Prozessionsweg 5, D-4740 Oelde(DE)**
Erfinder: **Wurr, Jürgen, Dipl.-Ing., An den Weiden 21,**
**D-4722 Ennigerloh(DE)**
Erfinder: **Unland, Georg, Dr. Ing., Dahlienweg 3,**
**D-4722 Ennigerloh(DE)**
Erfinder: **Dürr, Manfred, Dipl.-Ing., Im Bulte 18,**
**D-4740 Oelde(DE)**
Erfinder: **Krützner, Karl, Rostocker Strasse 8,**
**D-4720 Beckum 2(DE)**
Erfinder: **Driemeier, Günter, Dipl.-Ing., Mertenshöhe 26,**
**D-4543 Lienen(DE)**
Erfinder: **Menzel, Karl, Dipl.-Ing., Breslauer Strasse 16,**
**D-4722 Ennigerloh(DE)**
Erfinder: **Rother, Wolfgang, Dipl.-Ing.,**
**Anton-Aulke-Weg 4, D-4740 Oelde 4(DE)**
Erfinder: **Schaberg, Frank, Dr. Ing.,**
**Hindenburgstrasse 10, D-4740 Oelde(DE)**
Erfinder: **Klockenbusch, Heinrich, Dipl.-Ing.,**
**Händelweg 25, D-4730 Ahlen(DE)**

(74) Vertreter: **Tetzner, Volkmar, Dr.-Ing. Dr. jur.,**
**Van-Gogh-Strasse 3, D-8000 München 71(DE)**

ACTORUM AG

## Beschreibung

Die Erfindung betrifft ein Verfahren entsprechend dem Oberbegriff des Anspruches 1 sowie eine Anlage zur Durchführung dieses Verfahrens.

Ein Verfahren entsprechend dem Oberbegriff des Anspruches 1 ist durch die DE-A- 27 24 654 und die JA-A- 26 410/1972 bekannt.

Bei dem Verfahren gemäß DE-A- 27 24 654 ist die Vorcalcinationszone in Durchgangsrichtung des Gutes in mindestens zwei Reaktionszonen aufgeteilt, wobei jeder dieser Reaktionszonen gesondert Wärme aus Brennstoffen zugeführt wird. Das Gut wird dabei vor Aufgabe in die jeweils nachfolgende untere Reaktionszone von den Heißgasen der oberen Reaktionszone getrennt. Während der unteren Reaktionszone ausschließlich die Abgase der Brennzone zugeführt werden, erhält die obere Reaktionszone auch Verbrennungsluft von der Kühlzone.

Bei dem Verfahren gemäß JA-A- 26 410/1972 bilden die beiden untersten Zyklone eines mehrstufigen Zyklonvorwärmers die mit zusätzlichem Brennstoff versorgte Vorcalcinationszone, die von den Abgasen der Brennzone (d.h. des Drehrohrofens) durchströmt wird und der außerdem von der Kühlzone zusätzliche Verbrennungsluft, aufgeteilt in zwei Teilluftströme, zugeführt wird.

Bei Verfahren dieser im Oberbegriff des Anspruches 1 vorausgesetzten Art enthalten die Abgase der Brennzone im allgemeinen einen mehr oder weniger großen Anteil an Stickstoffoxiden (sogenannter NO$_x$-Gehalt). Die Bildung dieser Stickstoffoxide geschieht teils durch Reaktion des Sauerstoffs mit dem Stickstoff der Verbrennungsluft, teils durch Oxidieren der Stickstoffverbindungen des Brennstoffes (vgl. DE-Z "Zement-Kalk-Gips", 6/1980,310-313).

Der NO$_x$-Gehalt der Abgase der Brennzone ist nicht zuletzt wegen der hierdurch verursachten Abgaseprobleme unerwünscht. Der Erfindung liegt daher die Aufgabe zugrunde, ein Verfahren der im Oberbegriff des Anspruches 1 vorausgesetzten Art dahin weiterzuentwickeln, daß der NO$_x$-Gehalt der Abgase verringert wird.

Diese Aufgabe wird erfindungsgemäß durch die kennzeichnenden Merkmale des Anspruches 1 gelöst.

Erfindungsgemäß wird somit an der der Brennzone näher gelegenen ersten Brennstoff-Zugabestelle eine solche Brennstoffteilmenge zugegeben und gleichzeitig der Sauerstoffgehalt der Gase in diesem Bereich der Vorcalcinationszone so bemessen, daß in diesem Bereich eine unterstöchiometrische Verbrennung erfolgt und sich ein CO-Gehalt zwischen 0,05 und 1%, vorzugsweise zwischen 0,2 und 0,8%, einstellt. Auf diese Weise werden in diesem Bereich der Vorcalcinationszone reduzierende Bedingungen geschaffen, durch die ein Abbau des NO$_x$-Gehaltes der Abgase der Brennzone erfolgt, indem das Kohlenmonoxid mit den Stickstoffoxiden unter Bildung von Stickstoff und Kohlendioxid reagiert.

Die Einstellung des Sauerstoffgehaltes in diesem ersten Bereich der Vorcalcinationszone erfolgt erfindungsgemäß dadurch, daß die von der Kühlzone zugeführte Verbrennungsluft in Form von wenigstens zwei Teilströmen im Bereich der beiden Brennstoff-Zugabestellen in die Vorcalcinationszone eingeführt wird. Erfindungsgemäß erfolgt somit schon an der ersten Brennstoff-Zugabestelle auch eine gesteuerte Luftzuführung. Auf diese Weise ist es möglich, im Bereich der ersten Brennstoff-Zugabestelle nicht nur einen gewünschten CO-Gehalt einzustellen, sondern zugleich eine einstellbare CO-Menge zu erzeugen.

Um den Abbau des NO$_x$-Gehaltes im ersten Bereich der Vorcalcinationszone zu unterstützen, ist es vorteilhaft, gleichzeitig auch eine Teilmenge des Gutes in diesem Bereich der Vorcalcinationszone einzuführen. Dieses Gut übt einerseits eine katalytische Wirkung auf die Reaktion des CO mit den Stickstoffoxiden aus und dient gleichzeitig zur Steuerung der Temperatur in diesem Bereich der Vorcalcinationszone, da es die aus der Verbrennung entstehende Wärme durch Entsäuerung aufnimmt.

Gemäß einer zweckmäßigen Ausgestaltung der Erfindung wird daher das in der Vorwärmzone vorgewärmte Gut in Form von wenigstens zwei einstellbaren Teilmengen im Bereich der beiden Brennstoff-Zugabestellen in die Vorcalcinationszone eingeführt.

Da der NO$_x$-Gehalt der Abgase der Brennzone in Abhängigkeit von den Brennbedingungen im Betrieb gewissen Veränderungen unterliegt, ist es zweckmäßig, die NO$_x$-Konzentration der Abgase der Brennzone vor Eintritt in die Vorcalcinationszone zu messen und den CO-Gehalt in der Vorcalcinationszone im Bereich der ersten Brennstoff-Zugabestelle entsprechend diesem NO$_x$-Meßwert einzustellen. Je höher der NO$_x$-Meßwert ist, umso höher muß der CO-Gehalt im ersten Bereich der Vorcalcinationszone gewählt werden, um eine ausreichende Minderung des NO$_x$-Gehaltes zu erreichen. Die Wahl von CO-Konzentrationen über etwa 1% ist allerdings im allgemeinen wegen der damit verbundenen Gefahr einer Ansatzbildung nicht zweckmäßig.

Die Aufteilung der von der Kühlzone zugeführten Verbrennungsluft wird grundsätzlich in Abhängigkeit von der Aufteilung des Brennstoffes auf die beiden Brennstoff-Zugabestellen vorgenommen.

Ein Ausführungsbeispiel einer Anlage zur Durchführung des erfindungsgemäßen Verfahrens ist in der Zeichnung schematisch veranschaulicht. Es zeigen

Fig. 1 eine Schemadarstellung einer erfindungsgemäßen Anlage,
Fig. 2 und 3 Schnitte durch die Vorcalcinationszone (längs der Linien II-II bzw. III-III der Fig.1),
Fig. 4 und 5 Schnitte durch abgewandelte Ausführungen der Lufteinführung in die Vorcalcinationszone,
Fig. 6 ein Diagramm zur Erläuterung der Funktion.

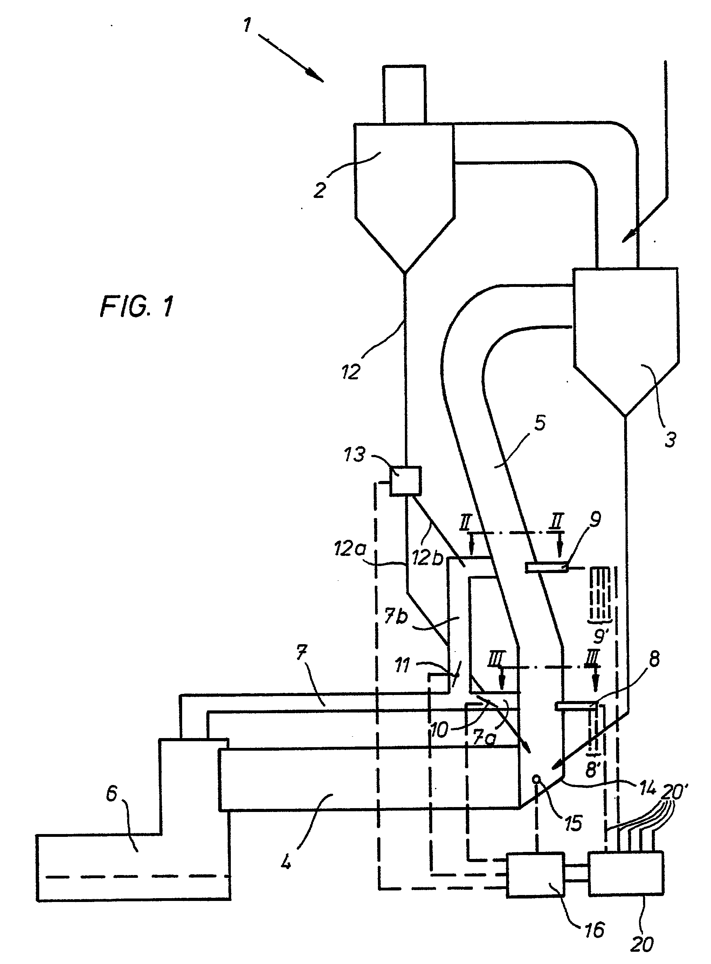

Die in Fig. 1 veranschaulichte Anlage zur Wärmebehandlung von feinkörnigem Gut, insbesondere zur Herstellung von Zement, enthält einen die Vorwärmzone bildenden mehrstufigen Schwebegas-Wärmetauscher 1, von dem lediglich die beiden untersten Zyklone 2 und 3 dargestellt sind. Weiterhin enthält die Anlage einen die Brennzone bildenden Drehrohrofen 4, eine den Drehrohrofen 4 mit dem Schwebegas-Wärmetauscher 1 verbindende, die Vorcalcinationszone bildende Gasleitung 5 sowie einen die Kühlzone bildenden Kühler 6, der mit der Vorcalcinationszone (Gasleitung 5) über eine Kühlluftleitung 7 verbunden ist.

Die die Vorcalcinationzone bildende Gasleitung 5 enthält zwei in Längsrichtung der Leitung mit Abstand voneinander angeordnete Brennstoff-Zugabestellen 8 und 9, die jeweils aus einer Mehrzahl von in unterschiedlicher Lage vorgesehenen Brennstoff-Zugabepunkten 8', 9' bestehen (z.B. aus mehreren Kohleeinblasstutzen).

Die den Kühler 6 mit der Vorcalcinationszone verbindende Kühlluftleitung 7 ist in zwei Kühlluft-Teilleitungen 7a, 7b unterteilt, die in die Gasleitung 5 an zwei in Längsrichtung der Leitung mit Abstand voneinander angeordneten Stellen, beim Ausführungsbeispiel im Bereich der beiden Brennstoff-Zugabestellen 8 und 9, einmünden.

Es ist eine Einrichtung zur Aufteilung der vom Kühler 6 zugeführten Verbrennungsluft auf die beiden Kühlluft-Teilleitungen 7a, 7b vorgesehen, die beim Ausführungsbeispiel durch zwei in diesen Leitungen angeordnete Klappen 10, 11 gebildet wird.

Die Gutaustragsleitung 12 der zweituntersten Stufe (Zyklon 2) des Schwebegas-Wärmetauschers 1 ist in zwei Gutleitungen 12a, 12b unterteilt, von denen die Gutleitung 12a beim dargestellten Ausführungsbeispiel in die die Vorcalcinationszone bildende Gasleitung 5 einmündet (und zwar etwa unterhalb der Brennstoff-Zugabestelle 8), während die Gutleitung 12b in die Kühlluft-Teilleitung 7b vor deren Anschluß an die Gasleitung 5 einmündet.

Es ist ferner eine (nur schematisch angedeutete) Einrichtung 13 zur Aufteilung des aus der zweituntersten Stufe (Zyklon 2) des Schwebegas-Wärmetauschers 1 ausgetragenen Gutes auf die beiden Gutleitungen 12a, 12b vorgesehen.

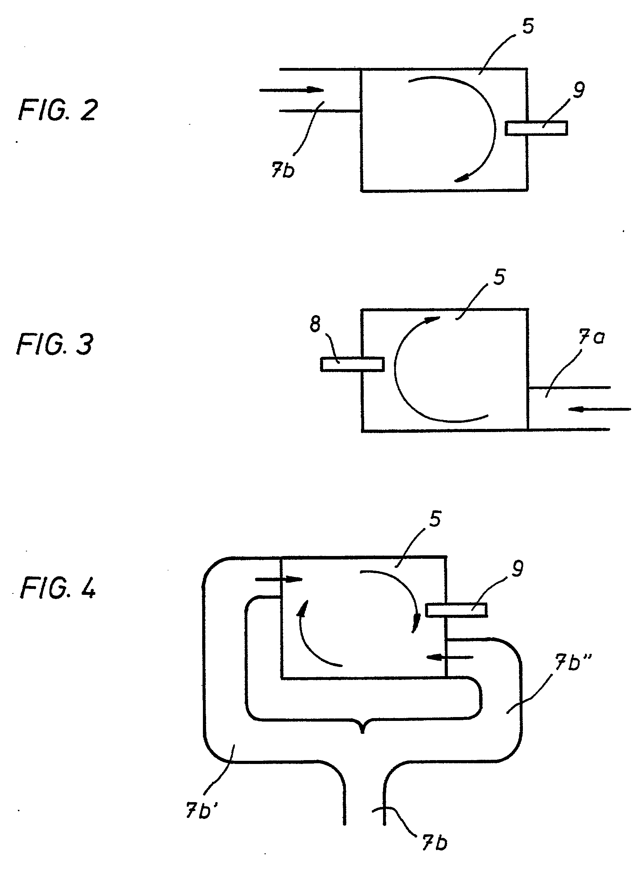

Die Fig. 2 und 3 veranschaulichen ein Ausführungsbeispiel der Einmündung der Kühlluft-Teilleitungen 7a und 7b in die Gasleitung 5. Die beiden Kühlluft-Teilleitungen 7a, 7b münden hierbei tangential, unter Erzeugung zweier gleichsinniger Wirbel, in die die Vorcalcinationszone bildende Gasleitung 5 ein. Statt dessen ist es jedoch auch möglich, die Einmündung der beiden Kühlluft-Teilleitungen 7a, 7b so zu wählen, daß im Bereich der beiden Brennstoff-Zugabestellen 8 und 9 gegensinnige Wirbel in der Gasleitung 5 erzeugt werden. Die Gasleitung 5 kann ferner selbstverständlich auch einen runden Querschnitt besitzen.

Bei der in Fig. 4 veranschaulichten Variante ist die Kühlluft-Teilleitung 7b vor ihrer Einmündung in die Gasleitung 5 in zwei Leitungsendstücke 7b', 7b" unterteilt, die unter Erzeugung eines gleichsinnigen Wirbels an verschiedenen Umfangsstellen tangential in die Gasleitung 5 einmünden. Eine entsprechende Anordnung kann selbstverständlich auch für die andere Kühlluft-Teilleitung 7a gewählt werden.

Um den $NO_x$-Gehalt der Abgase des Drehrohrofens 4 zu messen, ist im Bereich des Einlaufgehäuses 14 des Drehrohrofens ein Meßelement 15 vorgesehen, das an eine Regeleinrichtung 16 angeschlossen ist. Diese Regeleinrichtung 16 steht andererseits über die gestrichelt angedeuteten Leitungen mit einem Brennstoff-Verteiler 20, den Klappen 10, 11 und der Einrichtung 13 zur Aufteilung des Gut stromes in Verbindung.

Die Funktion der dargestellten Anlage gemäß dem erfindungsgemäßen Verfahren ist damit wie folgt:

Das feinkörnige Gut wird zunächst in üblicher Weise in dem die Vorwärmzone bildenden Schwebegas-Wärmetauscher 1 mit den heißen Abgasen der Vorcalcinationszone vorgewärmt. Es wird dann in der mit zusätzlichem Brennstoff versorgten Vorcinationszone weitererhitzt und entsäuert (vorcalciniert), ehe es dann in dem die Brennzone bildenden Drehrohrofen 4 fertiggebrannt und im Kühler 6 gekühlt wird.

Der untere Bereich der von der Gasleitung 5 gebildeten Vorcalcinationszone dient bei der erfindungsgemäßen Anlage nicht nur zur Entsäuerung des über die Gutleitung 12a eingetragenen vorgewärmten Gutes, sondern vor allem zur Verringerung des $NO_x$-Gehaltes der Abgase der Drehrohrofens 4. Zu diesem Zweck wird über die Brennstoff-Zugabestelle 8 in diesen unteren Bereich der Gasleitung 5 so viel Brennstoff eingetragen, und es wird zugleich die über die Kühlluft-Teilleitung 7a zugeführte Verbrennungsluftmenge so bemessen, daß in diesem unteren Bereich der Gasleitung 5 eine unterstöchiometrische Verbrennung erfolgt und sich ein CO-Gehalt zwischen 0,05 und 1%, vorzugsweise zwischen 0,2 und 0,8%, einstellt. Unter diesen redzierenden Bedingungen werden die in den Abgasen des Drehrohrofens 4 enthaltenen Stickstoffoxide weitgehend in Stickstoff und $CO_2$ abgebaut. Das über die Gutleitung 12a in diesen unteren Bereich der Gasleitung 5 eingetragene Gut übt dabei eine katalytische Wirkung auf die Entstickung aus und dient zugleich zur Steuerung der Temperatur in diesem Bereich, da es die aus der Verbrennung entstehende Wärme durch Entsäuerung aufnimmt.

In dem nach oben anschließenden Bereich der Gasleitung 5 wird über die Brennstoff-Zugabestelle 9 weiterer Brennstoff, über die Kühlluft-Teilleitung 7b weitere Verbrennungsluft und über die Gutleitung 12b das restliche Gut eingeführt. In diesem Bereich der Gasleitung 5 erfolgt der Ausbrand des aus dem unteren Teil der Gasleitung 5 austretenden CO, ferner die Verbrennung des über die Zugabestelle 9 zugeführten weiteren Brennstoffes.

Die Menge der über die Kühlluft-Teilleitung 7a in den unteren Bereich der Vorcalcinationszone eingeführten Verbrennungsluft kann beispielsweise zwischen 0 und 50% variiert werden, um in diesem Bereich der Gasleitung 5 die für den $NO_x$-Abbau notwendige CO-Atmosphäre zu gewährleisten. Die Brennstoff- und Gutmenge werden entsprechend eingestellt. Die Menge der über die Kühlluft-Teilleitung 7b in den zweiten Bereich der Vorcalcinationszone eingeführten Verbrennungsluft ist dann zwischen 50 und 100% variabel, womit sich der Restausbrand des erzeugten CO und der Ausbrand des über die Zugabestelle 9 zugeführten Brennstoffes regulieren läßt. Die Länge des Bereiches der Vorcalcinationszone, in dem reduzierende Bedingungen herrschen, kann entsprechend den Erfordernissen variiert werden. Zu diesem Zweck ist auch eine Veränderung der Höhenlage der Brennstoff-Zugabestelle 8 möglich.

Wie aus der obigen Beschreibung hervorgeht, soll in der unteren Ebene der Brennstoff-Zugabestelle 8 eine unterstöchiometrische Verbrennung erfolgen und CO erzeugt werden, durch das eine Reduktion des aus dem Drehrohrofen 4 kommenden $NO_x$ erfolgt. Die Restverbrennung von CO und Brennstoff soll dann in der höher gelegenen Ebene der Brennstoff-Zugabestelle 9 erfolgen. Da die Sauerstoffmengen in den beiden genannten Ebenen bei den verschiedenen Betriebszuständen unterschiedlich sind und die genauen Massenströme von Gas, Brennstoff und Gut erst bei der Optimierung des Ofenbetriebes während der Inbetriebnahme eingestellt werden können, muß vor allem die Brennstoffmenge in der unteren und oberen Ebene variiert werden können. Bei der vielfach üblichen Verwendung von Kohlenstaub als Brennstoff bestehen auch auf der Förderseite der Kohle gewisse Einschränkungen. So sollte die Beladung der Förderluft mit Kohle möglichst hoch sein, um den Wärmeverbrauch der Ofenanlage niedrig zu halten (Belastung etwa 6 kg Kohle/kg Luft); die Förderung der Kohle soll ferner möglichst pulsationsfrei erfolgen (Froude-Zahl ≥ 25).

Bei einer zweckmäßigen Variante der Erfindung erfolgt daher eine modulartige Einbringung des Brennstoffes (Kohlenstaub) in die Vorcalcinationszone. Wie in Fig. 1 angedeutet, wird der gesamte Brennstoffstrom in dem topfförmig ausgebildeten Verteiler 20 auf beispielsweise fünf Leitungen (Brennstoffausgänge 20') verteilt. In die untere Ebene, d.h. zur Brennstoff-Zugabestelle 8, führen beispielsweise drei Leitungen (Brennstoffzugabepunkte 8') , und in die obere Ebene (Brennstoff-Zugabestelle 9) beispielsweise fünf Leitungen (Brennstoff-Zugabepunkte 9'). Diese acht Leitungen können wahlweise mit den fünf Ausgängen des Verteilers 20 verbunden werden. So läßt sich die Brennstoffmenge in beiden Ebenen in 20%-Stufen, für die gesamte, für die Vorcalcination vorgesehene Brennstoffmenge einstellen. Die Feinregulierung der Verbrennung erfolgt dann mit den bereits erwähnten Klappen 10 und 11 in den Leitungen 7a, 7b.

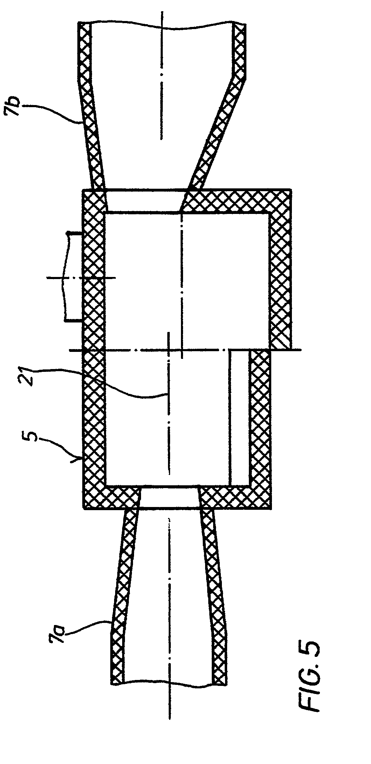

Fig. 5 veranschaulicht eine weitere zweckmäßige Variante der Einmündung der Kühlluft-Teilleitungen 7a und 7b in die Gasleitung 5. Fig. 5 ist dabei als ein in der Höhenlage gestufter Schnitt durch die Gasleitung 5 zu verstehen, wobei die linke Hälfte der Fig. 5 die Verhältnisse in Höhe der Einmündung der Leitung 7a und die rechte Hälfte der Fig. 5 die Verhältnisse im Bereich der Einmündung der Leitung 7b zeigt (die Gasleitung 5 besitzt in Höhe der Einmündung der Leitung 7b einen etwas größeren Querschnitt als in Höhe der Einmündung der Leitung 7a).

Die Anordnung der Brennstoff-Zugabepunkte 8' bzw. 9' sowie die zum Verteiler 20 führenden Brennstoffleitungen sind in Fig. 5 der besseren Übersichtlichkeit wegen nicht dargestellt.

Wie Fig. 5 erkennen läßt, mündet die untere Kühlluft-Teilleitung 7a zentral in die Gasleitung 5 ein; die Achse der Leitung 7a liegt daher etwa in der vertikalen Mittelebene 21 der Gasleitung 5. Zweckmäßig besitzt die Teilleitung 7a darüber hinaus eine nach unten gerichtete Neigung, so daß die durch die Leitung 7a zugeführte Verbrennungsluft entgegengesetzt zum Ofenabgasstrom in die Gasleitung 5 eintritt. Durch diese zentrale Einmündung der Leitung 7a wird eine gleichmäßige CO-Entwicklung über den gesamten Querschnitt der Gasleitung 5 erreicht. Auf diese Weise wird vermieden, daß $NO_x$-reiche Gassträhnen aus dem Drehrohrofen 4 an den COhaltigen Gasen vorbeiströmen können.

Die obere Kühlluft-Teilleitung 7b mündet dagegen tangential in die Gasleitung 5 ein. Hierdurch wird eine starke Turbulenz in diesem Bereich der Vorcalcinationszone erreicht, die eine gute Restverbrennung des CO und des übrigen Brennstoffes sicherstellt.

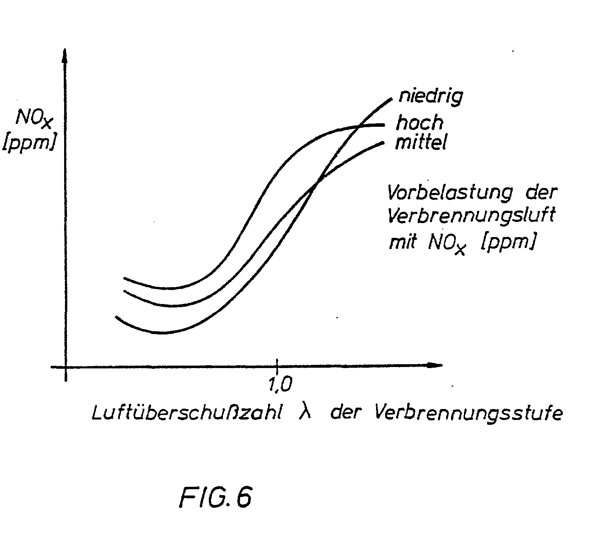

Zur weiteren Erläuterung der Erfindung sei noch Fig. 6 sowie ein Arbeitsbeispiel erläutert.

Die Reaktionskette zur Entstehung von $NO_x$ aus Luft-und Brennstoff-Stickstoff läuft über viele miteinander konkurrierende Reaktionen und bedingt das Vorhandensein von Radikalen wie $NH_2$, CN, OH, H, N, O usw. Wichtig sind hierbei nicht nur die einzelnen Bildungsreaktionen zum $NO_x$ hin, sondern vor allem auch die Rückreaktionen vom $NO_x$ zum elementaren $N_2$.

Besonders die Anwesenheit von CH-Radikalen begünstigt die Rückreaktion zu $N_2$, also den Abbau von $NO_x$. Durch eine gezielte abgestufte Verbrennung kann bei einer unterstöchiometrisch betriebenen Feuerung über die Radikal-Reaktionen ein $NO_x$-Abbau erreicht werden. Tendenziell besteht insoweit die in Fig. 6 veranschaulichte Abhängigkeit (zwischen dem gebildeten $NO_x$ und der Luftüberschußzahl λ der Verbrennungsstufe, wobei als Parameter die Vorbelastung der Verbrennungsluft mit $NO_x$ gewählt ist). In den Absolut werten unterscheidet sich diese prinzipielle Abhängigkeit für jeden Brennstoff, jede Brennraumgeometrie und jeden Brenner.

Die vorliegende Erfindung ermöglicht nun durch die Variabilität in der Betriebsweise der beiden Brennstoff-Aufgabestellen eine Einstellung, die dem Punkt minimaler $NO_x$-Erzeugung gemäß Fig. 6 nahekommt.

Bei einem praktischen Ausführungsbeispiel des erfindungsgemäßen Verfahrens mit einer Anlage gemäß Fig. 1 ergeben sich an den einzelnen Stellen der Anlage folgende Analysenwerte, wobei man die erzielte $NO_x$-Verringerung aus dem Verlauf der NO-Werte erkennt:

Luftaufteilung auf die Kühlluft-Teilleitungen 7a, 7b ("kg/Kl" bedueted "pro kg Klinker").

| Luftmenge in Leitung 7 | 0,51 $m^3_n$/kg Kl |
|---|---|
| Luftmenge in Leitung 7a | 0,09 $m^3_n$/kg Kl |
| Luftmenge in Leitung 7b | 0,42 $m^3_n$/kg Kl |

Gasanalysenwerte am Ende des Drehrohrofens 4:

| Gasmenge | = | 0,52 $m^3_n$/kg Kl |
|---|---|---|
| $CO_2$ | = | 23,0% |
| $O_2$ | = | 2,0% |
| CO | = | 0,03% |
| NO | = | 1800 ppm |
| | = | 1,18 g NO/kg Kl |
| $\lambda$ | = | 1,11 |

Brennstoffzugabestelle 8:
zugegebene Brennstoffmenge 500 kJ/kg Kl
Gasanalysenwerte in der Gasleitung 5 (zwischen den Brennstoffzugabestellen 8 und 9):

| Gasmenge | = | 0,68 $m^3_n$/kg Kl |
|---|---|---|
| $CO_2$ | = | 30,0% |
| $O_2$ | = | – |
| CO | = | 0,5% |
| NO | = | 390 ppm |
| | = | 0,34 g NO/kg Kl |
| $\lambda$ | = | 0,95 |

Brennstoffzugabestelle 9:
zugegebene Brennstoffmenge 1170 kJ/kg Kl
Gasanalysewerte in der Gasleitung 5 (oberhalb der Brennstoffzugabestelle 9):

| Gasmenge | = | 1,34 $m^3_n$/kg Kl |
|---|---|---|
| $CO_2$ | = | 32,6% |
| $O_2$ | = | 2,6% |
| CO | = | 0,06% |
| NO | = | 350 ppm |
| | = | 0,60 g NO/kg Kl |
| $\lambda$ | = | 1,18 |

## Patentansprüche

1. Verfahren zur Wärmebehandlung von feinkörnigem Gut, insbesondere zur Herstellung von Zement, enthaltend folgende Verfahrensschritte:
a) das Gut wird zunächst in einer Vorwärmzone (1) mit den heißen Abgasen einer Vorcalcinationszone (5) vorgewärmt;
b) es wird dann in einer mit zusätzlichem Brennstoff versorgten Vorcalcinationszone (5) weiter erhitzt und entsäuert;
c) anschließend wird das Gut in einer Brennzone (4) fertiggebrannt und hiernach in einer Kühlzone (6) gekühlt;
d) der Vorcalcinationszone (5) wird außer den Abgasen der Brennzone (4) auch vorgewärmte Verbrennungsluft von der Kühlzone (6) zugeführt;
e) der Brennstoff für die Vorcalcinationszone (5) wird in wenigstens zwei Teilmengen an Stellen (8, 9) aufgegeben, die in Strömungsrichtung der die Vorcalcinationszone durchsetzenden Gase einen Abstand voneinander aufweisen;
gekennzeichnet durch folgende Merkmale:
f) die von der Kühlzone (6) zugeführte Verbrennungsluft wird in Form von wenigstens zwei einstellbaren Teilströmen im Bereich der beiden Brennstoff-Zugabestellen (8, 9) in die Vorcalcinationszone (5) eingeführt;
g) die an der der Brennzone (4) näher gelegenen Stelle zugegebene erste Brennstoff-Teilmenge sowie der Sauerstoffgehalt der diesen Bereich der Vorcalcinationszone (5) durchsetzenden Gase werden so bemessen, daß in deisem Bereich eine unterstöchiometrische Verbrennung erfolgt und sich ein CO-Gehalt zwischen 0,05 und 1 %, vorzugsweise zwischen 0,2 und 0,8 % einstellt.

2. Verfahren nach Anspruch 1, dadurch gekennzeichnet, daß das in der Vorwärmzone (1) vorgewärmte Gut in Form von wenigstens zwei einstellbaren Teilmengen im Bereich der beiden Brennstoff-Zugabestellen (8, 9) in die Vorcalcinationszone (5) eingeführt wird.

3. Verfahren nach Anspruch 1, dadurch gekennzeichnet, daß die $NO_x$-Konzentration der Abgase der Brennzone (4) vor Eintritt in die Vorcalcinationszone (5) gemessen und der CO-Gehalt in der Vorcalcinationszone (5) im Bereich der ersten Brennstoff-Zugabestelle (8) entsprechend diesem $NO_x$-Meßwert eingestellt wird.

4. Verfahren nach Anspruch 1, dadurch gekennzeichnet, daß die Aufteilung der von der Kühlzone (6) zugeführten Verbrennungsluft in Abhängigkeit von der Aufteilung des Brennstoffes auf die beiden Brennstoff-Zugabestellen (8, 9) erfolgt.

5. Verfahren nach Anspruch 2, dadurch gekennzeichnet, daß die Aufteilung des Gutes auf die beiden Zugabestellen in der Vorcalcinationszone (5) so erfolgt, daß sich im Bereich der ersten Brennstoff-Zugabestelle (8) eine maximale Verringerung des $NO_x$-Gehaltes ergibt.

6. Verfahren nach Anspruch 1 , gekennzeichnet durch folgende Merkmale:
a) an der der Brennzone (4) näher gelegenen ersten Brennstoff-Zugabestelle (8) wird zur Erzielung einer gleichmäßigen CO-Entwicklung über den gesamten Strömungs-Querschnitt der eine Teilstrom der von der Kühlzone (6) zugeführten Verbrennungsluft zentral und im wesentlichen entgegengesetzt zu den Abgasen der Brennzone (4) in die Vorcalcinationszone (5) eingeführt;
b) an der von der Brennzone (4) weiter entfernten zweiten Brennstoff-Zugabestelle (9) wird zur Erzielung einer guten Restverbrennung von CO und Brennstoff der andere Teilstrom der von der Kühlzone (6) zugeführten Verbrennungsluft unter Turbulenzerzeugung, vorzugsweise tangential, in die Vorcalcinationszone (5) eingeführt.

7. Anlage zur Durchführung des Verfahrens nach Anspruch 1, enthaltend
a) einen die Vorwärmzone bildenden mehrstufigen Schwebegas-Wärmetauscher (1),
b) einen die Brennzone bildenden Drehrohrofen (4),
c) eine den Drehrohrofen (4) mit dem Schwebegas-Wärmetauscher (1) verbindende, die Vorcalcinationszone bildende Gasleitung (5),
d) einen die Kühlzone bildenden Kühler (6), der mit der Vorcalcinationszone (5) über wenigstens eine Kühlluftleitung (7) verbunden ist,
gekennzeichnet durch folgende Merkmale:
e) die den Drehrohrofen (4) mit dem Schwebegas-Wärmetauscher (1) verbindende Gasleitung (5) enthält wenigstens zwei in Längsrichtung der Leitung mit Abstand voneinander angeordnete Brennstoff-Zugabestellen (8, 9);
f) es ist eine Einrichtung zur Aufteilung der Brennstoffmenge auf die beiden Zugabestellen (8, 9) vorgesehen.
g) die den Kühler (6) mit der Vorcalcinationszone (5) verbindende Kühlluftleitung (7) ist in wenigstens zwei Kühlluft-Teilleitungen (7a, 7b) unterteilt, die in die die Vorcalcinationszone bildende Gasleitung (5) an zwei in Längsrichtung der Leitung mit Abstand voneinander angeordneten Stellen, vorzugsweise im Bereich der beiden Brennstoff-Zugabestellen (8, 9) einmünden;
h) es ist eine Einrichtung (10, 11) zur Aufteilung der vom Kühler (6) zugeführten Verbrennungsluft auf die beiden Kühlluft-Teilleitungen (7a, 7b) vorgesehen.

8. Anlage nach Anspruch 7, gekennzeichnet durch folgende Merkmale:
i) die Gutaustragsleitung (12) der zweituntersten Stufe (2) des Schwebegas-Wärmetauschers (1) ist in wenigstens zwei Gutleitungen (12a, 12b) unterteilt, die im Bereich der beiden Brennstoff-Zugabestellen (8, 9) an die die Vorcalcinationszone bil dende Gasleitung (5) oder an die Kühlluftleitung (7) vor ihrer Einmündung in die Vorcalcinationszone angeschlossen sind;
k) es ist eine Einrichtung (13) zur Aufteilung des aus der zweituntersten Stufe (2) des Schwebegas-Wärmetauschers (1) ausgetragenen Gutes auf die beiden Gutleitungen (12a, 12b) vorgesehen.

9. Anlage nach Anspruch 7, dadurch gekennzeichnet, daß die beiden Kühlluft-Teilleitungen (7a, 7b) tangential, unter Erzeugung zweier gleichsinniger oder gegensinniger Wirbel, in die die Vorcalcinationszone bildende Gasleitung (5) einmünden.

10. Anlage nach Anspruch 9, dadurch gekennzeichnet, daß die beiden Kühlluft-Teilleitungen (7a, 7b) vor ihrer Einmündung in die die Vorcalcinationszone bildende Gasleitung (5) nochmals in wenigstens zwei Leitungsendstücke (z.B. 7b', 7b'') unterteilt sind, die unter Erzeugung eines gleichsinnigen Wirbels an verschiedenen Umfangsstellen tangential in die Gasleitung (5) einmünden.

11. Anlage nach Anspruch 7, dadurch gekennzeichnet, daß die untere Kühlluft-Teilleitung (7a) zentral und die obere Kühlluft-Teilleitung (7b) tangential in die die Vorcalcinationszone bildende Gasleitung (5) einmündet.

12. Anlage nach Anspruch 7, gekennzeichnet durch folgende weitere Merkmale:
i) die Einrichtung zur Aufteilung der Brennstoffmenge auf die beiden Zugabestellen (8, 9) enthält einen Verteiler (20) mit einer Anzahl von Brennstoff-Ausgängen (20');
k) die beiden Brennstoff-Zugabestellen (8, 9) bestehen jeweils aus einer Mehrzahl von in unterschiedlicher Lage vorgesehenen Brennstoff-Zugabepunkten (8', 9'),
l) die Brennstoff-Zugabepunkte (8', 9') der beiden Brennstoff-Zugabestellen (8, 9) sind in unterschiedlicher Zahl und Kombination an die Brennstoffausgänge (20') des Verteilers (20) anschließbar.

**Claims**

1. Method of heat treatment of fine-grained material, particularly for the production of cement, comprising the following stages:
a) the material is first of all preheated in a preheating zone (1) with the hot exhaust gases from a precalcination zone (5);
b) it is then further heated and deacidified in a precalcination zone (5) which is supplied with additional fuel;
c) then the material undergoes final burning in a combustion zone (4) and after that is cooled in a cooling zone (6);
d) in addition to the exhaust gases from the combustion zone (4) preheated air for combustion from the cooling zone (6) is also delivered to the precalcination zone (5);
e) the fuel for the precalcination zone (5) is delivered in at least two quantities at points (8, 9) which are spaced from one another in the direction of flow of the gases passing through the precalcination zone;
characterised by the following features:
f) the air for combustion delivered from the cooling zone (6) is introduced into the precalcination zone (5) in the region of the two fuel charging points (8, 9) in the form of two controllable streams;
g) the first quantity of fuel added at the point lying nearer to the combustion zone (4) and the oxygen content of the gases passing through this region of the precalcination zone (5) are such that in this region a sub-stoichiometric combustion takes place and a CO content between 0.05 and 1%, preferably between 0.2 and 0.8%, is set.

2. Method as claimed in claim 1, characterised in that the material preheated in the preheating zone (1) is introduced into the precalcination zone (5) in the form of at least two controllable quantities in the region of the two fuel charging points (8, 9).

3. Method as claimed in claim 1, characterised in that the $NO_x$ concentration in the exhaust gases from the combustion zone (4) is measured before entry into the precalcination zone (5) and the CO content in the precalcination zone (5) is set in the region of the first fuel charging point (8) according to this measured $NO_x$ value.

4. Method as claimed in claim 1, characterised in that the division of the air for combustion from the cooling zone (6) is carried out as a function of the division of the fuel at the two fuel charging points (8, 9).

5. Method as claimed in claim 2, characterised in that the division of the material at the two charging points in the precalcination zone (5) takes place in such a way that a maximum reduction of the $NO_x$ content is achieved in the region of the first fuel charging point (8).

6. Method as claimed in claim 1, characterised by the following features:
   a) in order to achieve a uniform CO development over the whole flow cross-section one branch stream of the air for combustion delivered from the cooling zone (6) is introduced centrally into the precalcination zone (5) at the first fuel charging point (8) lying nearer to the combustion zone (4) and essentially in counterflow to the exhaust gases from the combustion zone (4);
   b) in order to achieve good combustion of the remaining CO and fuel, the other branch stream of the air for combustion delivered from the cooling zone (6) is introduced at the second fuel charging point (9) lying further away from the combustion zone into the precalcination zone (5), preferably tangentially, and produces turbulence.

7. Apparatus for carrying out the method according to claim 1, containing
   a) a multi-stage suspended gas heat exchanger (1) forming the preheating zone,
   b) a rotary kiln (4) forming the combustion zone,
   c) a gas pipe (5) which forms the precalcination zone and connects the rotary kiln (4) to the suspended gas heat exchanger (1),
   d) a cooler (6) which forms the cooling zone and is connected to the precalcination zone (5) by at least one cooling air pipe (7),
   characterised by the following features:
   e) the gas pipe (5) connecting the rotary kiln (4) to the suspended gas heat exchanger (1) contains at least two fuel charging points (8, 9) arranged spaced from one another in the longitudinal direction of the pipe;
   f) an arrangement is provided for distributing the quantity of fuel to the two charging points (8, 9);
   g) the cooling air pipe (7) connecting the cooler (6) to the precalcination zone (5) is divided into at least two cooling air branch pipes (7a, 7b) which open into the gas pipe (5) which forms the precalcination zone at two points arranged spaced from one another in the longitudinal direction of the pipe, preferably in the region of the two fuel charging points (8, 9);
   h) an arrangement (10, 11) is provided for distributing the air for combustion delivered from the cooler (6) to the two cooling air branch pipes (7a, 7b).

8. Apparatus as claimed in claim 7, characterised by the following features:
   i) the material discharge pipe (12) from the second lowest stage (2) of the suspended gas heat exchanger (1) is divided into at least two material pipes (12a, 12b) which are connected in the region of the two fuel charging points (8, 9) to the gas pipe (5) forming the precalcination zone or to the cooling air pipe (7) before the point where it opens into the precalcination zone;
   k) an arrangement (13) is provided for distributing the material discharged from the second lowest stage (2) of the suspended gas heat exchanger (1) to the two material pipes (12a, 12b).

9. Apparatus as claimed in claim 7, characterised in that the two cooling air branch pipes (7a, 7b) open tangentially into the gas pipe (5) which forms the precalcination zone, producing two rotational flow patterns in the same or opposite directions.

10. Apparatus as claimed in claim 9, characterised in that before they open into the gas pipe (5) which forms the precalcination zone the two cooling air branch pipes (7a, 7b) are again divided into at least two pipe end pieces (e.g. 7b', 7b'') which open tangentially into the gas pipe (5), producing a rotational flow in the same direction at different peripheral points.

11. Apparatus as claimed in claim 7, characterised in that the lower cooling air branch pipe (7a) opens centrally and the upper cooling air pipe (7b) opens tangentially into the gas pipe (5) which forms the precalcination zone.

12. Apparatus as claimed in claim 7, characterised by the following further features:
   i) the arrangement for distributing the quantity of fuel to the two charging points (8, 9) contains a distributor (20) with a plurality of fuel outlets (20');
   k) the two fuel charging points (8, 9) each consist of a plurality of fuel charging points (8', 9') provided in different positions;
   l) the fuel charging points (8', 9') of the two fuel charging points (8, 9) can be connected in differing numbers and combinations to the fuel outlets (20') of the distributor (20).

**Revendications**

1. Procédé de traitement thermique de matière à granulométrie fine, en particulier pour la fabrication de ciment, comprenant les phases opératoires suivantes:
   a) la matière passe d'abord dans une zone (1) de réchauffage par les gaz chauds provenant d'une zone de précalcination (5);
   b) son chauffage se poursuit ensuite avec désacidification dans une zone de précalcination (5) alimentée en un complément de combustible;
   c) l'achèvement de la calcination de la matière a lieu ensuite dans une zone de cuisson (4) et finalement cette matière passe dans une zone de refroidissement (6);
   d) la zone de précalcination (5) reçoit non seulement les gaz provenant de la zone de cuisson (4), mais également de l'air comburant réchauffé qui provient de la zone de refroidissement (6);

e) le combustible destiné à la zone de précalcination (5) est introduit en au moins deux fractions en des lieux (8, 9) qui sont distants l'un de l'autre dans la direction d'écoulement des gaz passant par la zone de précalcination;
caractérisé par les particularités suivantes:
f) l'air comburant arrivant de la zone de refroidissement (6) est introduit sous forme d'au moins deux courants partiels réglables dans la zone de précalcination (5), dans la région des deux lieux (8, 9) d'introduction de combustible;
g) la première fraction de combustible introduite au lieu le plus proche de la zone de cuisson (4) ainsi que la teneur en oxygène des gaz passant par cette région de la zone de précalcination (5) sont dosées de manière que la combustion qui a lieu dans cette région soit sous-stœchiométrique et que la teneur en CO qui s'y établit se maintienne entre 0,05 et 1%, de préférence entre 0,2 et 0,8%.

2. Procédé selon la revendication 1, caractérisé en ce que la matière provenant de la zone de réchauffage (1) est introduite sous forme d'au moins deux fractions réglables dans la zone de précalcination (5), dans la région des deux lieux (8, 9) d'introduction de combustible.

3. Procédé selon la revendication 1, caractérisé en ce que la concentration en $NO_x$ des gaz provenant de la zone de cuisson (4) est mesurée avant leur entrée dans la zone de précalcination (5) et la teneur en CO des gaz se trouvant dans la zone de précalcination (5), dans la région du premier lieu (8) d'introduction de combustible, se règle en fonction de cette mesure de la concentration en $NO_x$.

4. Procédé selon la revendication 1, caractérisé en ce que la répartition de l'air comburant provenant de la zone de refroidissement (6) s'effectue en fonction de la répartition du combustible sur les deux lieux (8, 9) d'introduction de ce dernier.

5. Procédé selon la revendication 2, caractérisé en ce que la répartition de la matière sur les deux lieux d'admission dans la zone de précalcination (5) s'effectue de manière qu'il en résulte une réduction maximale de la teneur en $NO_x$ dans la région du premier lieu (8) d'introduction de combustible.

6. Procédé selon la revendication 1, caractérisé par les particularités suivantes:
a) l'un des courants partiels de l'air comburant arrivant de la zone de refroidissement (6) est introduit centralement dans la zone de précalcination (5) et sensiblement dans le sens inverse à celui de l'écoulement des gaz provenant de la zone de cuisson (4), à proximité du premier lieu (8) d'introduction de combustible qui est le plus proche de ladite zone de cuisson (4), afin d'obtenir un dégagement uniforme de CO sur la totalité de la section d'écoulement;
b) l'autre courant partiel de l'air comburant arrivant de la zone de refroidissement (6) est introduit dans la zone de précalcination (5) de manière à produire une turbulence, de préférence tangentiellement, à proximité du second lieu (9) d'introduction de combustible qui est le plus éloigné de la zone de cuisson (4), afin d'obtenir un bon achèvement de la combustion du CO et du combustible.

7. Installation pour la mise en œuvre du procédé selon la revendication 1, comprenant
a) un dispositif (1) à plusieurs étages de préchauffage par mise en suspension dans les gaz, qui forme la zone de réchauffage,
b) un four tubulaire rotatif (4), qui forme la zone de cuisson,
c) une canalisation des gaz (5), qui forme la zone de précalcination et qui relie le four tubulaire rotatif (4) et le dispositif (1) de préchauffage par mise en suspension dans les gaz,
d) un réfrigérant (6) formant la zone de refroidissement et qu'au moins une canalisation (7) d'air de refroidissement relie à la zone de précalcination (5).
caractérisée par les particularités suivantes:
e) la canalisation des gaz (5), qui relie le four tubulaire rotatif (4) et le dispositif (1) de préchauffage par mise en suspension dans les gaz, comporte au moins deux lieux (8, 9) d'introduction de combustible qui sont distants l'un de l'autre dans la direction de la longueur de cette canalisation;
f) un appareillage est prévu pour répartir le débit de combustible sur les deux lieux d'introduction (8, 9);
g) la canalisation d'air de refroidissement (7), qui relie le réfrigérant (6) et la zone de précalcination (5), est subdivisée en au moins deux sous-canalisations (7a, 7b) qui débouchent dans la canalisation des gaz (5) formant la zone de précalcination en deux emplacements distants l'un de l'autre dans la direction de la longueur de cette canalisation des gaz, de préférence à proximité des deux lieux (8, 9) d'introduction de combustible;
h) un appareillage (10, 11) est prévu pour la répartition de l'air comburant provenant du réfrigérant (6) sur les deux sous-canalisations (7a, 7b) d'air de refroidissement.

8. Installation selon la revendication 7, caractérisée par la particularité suivante:
i) la canalisation (12) de décharge de la matière de l'avant-dernière étage (2) du dispositif (1) de préchauffage par mise en suspension dans les gaz est subdivisée en au moins deux conduits (12a, 12b) qui sont raccordés à la canalisation des gaz (5) formant la zone de précalcination à proximité des deux lieux (8, 9) d'introduction du combustible ou à la canalisation (7) d'air de refroidissement, en amont de l'embouchure de cette dernière dans la zone de précalcination;
k) un appareillage (13) est prévu pour la répartition sur les deux conduits (12a, 12b) de la matière déchargée de l'avant-dernière étage (2) du dispositif (1) de préchauffage par mise en suspension dans les gaz.

9. Installation selon la revendication 7, caractérisée en ce que les deux sous-canalisations (7a, 7b) d'air de refroidissement débouchent tangentiellement dans la canalisation des gaz (5) formant la zone de précalcination de manière à y créer deux tourbillons de même sens ou de sens inverses.

10. Installation selon la revendication 9, caractérisée en ce que les deux sous-canalisations (7a, 7b) d'air de refroidissement sont encore subdivisées en au moins deux tronçons terminaux (par exemple 7b', 7b") avant leur embouchure dans la canalisation des gaz (5) formant la zone de précalcination, ces deux tronçons terminaux débouchant dans ladite canalisation des gaz (5) tangentiellement en des emplacements différents de sa circonférence de manière à y provoquer dans chaque cas un tourbillon de même sens que l'autre.

11. Installation selon la revendication 7, caractérisée en ce que la sous-canalisation inférieure (7a) d'air de refroidissement débouche centralement et la sous-canalisation supérieure (7b) d'air de refroidissement débouche tangentiellement dans la canalisation des gaz (5) qui forme la zone de précalcination.

12. Installation selon la revendication 7, caractérisée par les autres particularités suivantes:

i) l'appareillage de répartition du débit de combustible sur les deux lieux d'introduction (8, 9) comprend un distributeur (20) à plusieurs sorties (20') de combustible;

k) chacun des deux lieux (8, 9) d'introduction de combustible se compose de plusieurs points d'introduction (8', 9') prévus en des emplacements différents,

l) les points (8', 9') des lieux (8, 9) d'introduction de combustible peuvent se raccorder en nombres et combinaisons différentes aux sorties (20') de combustible du distributeur (20).

*FIG. 1*

FIG. 2

FIG. 3

FIG. 4

FIG. 5

FIG. 6